# EUROPÄISCHE PATENTANMELDUNG

(11) **EP 1 927 782 A1**
(43) Veröffentlichungstag der Anmeldung: **04.06.2008**
(21) Anmeldenummer: 07021359.0
(22) Anmeldetag: 02.11.2007
(51) Int. Cl.: F16F 7/10, F16F 15/00

(54) **Aktiver Tilger**

(30) Priorität: 01.12.2006 DE 102006056757
(71) Anmelder: Wölfel Beratende Ingenieure GmbH & Co. KG, 97204 Höchberg (DE)
(72) Erfinder: Engelhardt, Jürgen, 97204 Höchberg (DE); Pankoke, Steffen, 97837 Erlenbach (DE); Wölfel, Horst Peter, 97204 Höchberg (DE)
(74) Vertreter: Knoblauch, Andreas

(57) **Zusammenfassung**

Es wird ein aktiver Tilger angegeben, der eine Tilgermasse (6) und eine Befestigungsvorrichtung (7) aufweist.

Man möchte einen weiteren aktiven Tilger bereitstellen.

Hierzu weist der aktive Tilger mindestens einen Biegebalken (1) auf, der die Tilgermasse (6) mit der Befestigungsvorrichtung (7) verbindet, wobei auf einer ersten Seite (2) des Biegebalkens (1) mindestens ein Piezoaktor (8) angeordnet ist.

## Beschreibung

Die Erfindung betrifft einen aktiven Tilger, der eine Tilgermasse und eine Befestigungsvorrichtung aufweist.

Aktive Tilger werden zur Schwingungsminderung von schwingungsfähigen Bauteilen eingesetzt. Sie bestehen in der Regel aus einem Masse-Feder-Dämpfungssystem, wobei durch einen Aktor auf die Masse zusätzliche Stellkräfte eingebracht werden können. Gegenüber passiven Tilgern kann die nötige Tilgermasse deutlich verringert werden. Dabei entspricht die Tilgermasse eines aktiven Tilgers in der praktischen Anwendung in etwa einem Zehntel der Tilgermasse eines passiven Tilgers bei vergleichbarer Wirkung.

Aktive Tilger können über einen größeren Frequenzbereich eine Schwingungsminderung erreichen als passive Tilger. Die Eigenfrequenz eines Tilgers wird üblicherweise auf die Frequenz der zu dämpfenden Schwingung bzw. auf die Resonanzfrequenz des zu dämpfenden Systems abgestimmt. Bei einem aktiven Tilger kann die Schwingung des Systems über einen Sensor erfaßt und durch einen Regelkreis eine entsprechende Stellgröße für den Aktor erzeugt werden, so daß die Schwingung des Systems gemindert wird. Dabei kann es sich um translatorische Schwingungen, Torsionsschwingungen oder um eine Kombination dieser Schwingungen handeln.

Die Aktoren sind in der Regel parallel zu einer Tilgerfeder angeordnet. Daher müssen die Aktoren relativ große Verstellbewegungen ausführen. Damit der Einfluß der Aktoren auf die Systemparameter möglichst gering ist, sollten die Aktoren eine geringe Dämpfung und eine geringe Steifigkeit aufweisen. Derartige Aktoren sind beispielsweise Tauchspulaktoren.

Der Erfindung liegt die Aufgabe zugrunde, einen aktiven Tilger bereitzustellen, der auch bei geringen Aktorwegen hohe Wirkung aufweist und zur Schwingungsminderung sowohl im Bereich der Schwingungen als auch der Akustik (Körperschall) verwendet werden kann.

Erfindungsgemäß wird diese Aufgabe bei einem aktiven Tilger der eingangs genannten Art dadurch gelöst, daß der aktive Tilger mindestens einen Biegebalken aufweist, der die Tilgermasse mit der Befestigungsvorrichtung verbindet, wobei auf einer ersten Seite des Biegebalkens mindestens ein Piezoaktor angeordnet ist.

Piezoaktoren nutzen den inversen piezoelektrischen Effekt aus. Durch Anlegen einer Spannung an einen Piezoaktor verschieben sich die Ionen im Kristallgitter, so daß sich der Piezoaktor ausdehnt oder zusammenzieht. Die Änderung erfolgt sowohl in Richtung des elektrischen Feldes (longitudinaler Effekt) als auch senkrecht zur Richtung des elektrischen Feldes (transversaler Effekt). Piezoaktoren erzeugen dabei sehr hohe Stellkräfte bei geringen Stellwegen. Bei der erfindungsgemäßen Vorrichtung wird der transversale Effekt ausgenutzt. Durch das Anordnen des Piezoaktors auf einer ersten Seite des Biegebalkens erfolgt eine Übersetzung der Stellbewegung des Piezoaktors durch den Biegebalken. Der Biegebalken dient dabei sowohl als Federelement, zur Führung der Tilgermasse als auch als Übersetzung für den Piezoaktor. Da die Steuerung der Piezoaktoren über die angelegte Spannung erfolgt, wobei nur sehr geringe Ströme fließen, ist ein leistungsarmer Betrieb möglich. Der erfindungsgemäße aktive Tilger arbeitet nahezu wartungs- und verschleißfrei, da die Piezoaktoren keine relativ zueinander bewegten Elemente aufweisen und alle beweglichen Koppelstellen als stoffschlüssige Gelenke ausgebildet sind.

Vorzugsweise ist auf einer zweiten Seite des Biegebalkens, die der ersten Seite gegenüberliegt, mindestens ein weiterer Piezoaktor angeordnet. Dadurch lassen sich die erzeugten Stellkräfte bei einer gegenphasigen Ansteuerung der jeweils gegenüberliegenden Piezoaktoren vergrößern. Damit wird eine stärkere Biegung in den Biegebalken induziert und so eine größere Verschiebung am Balkenende erreicht. Die Relativbewegung zwischen Tilgermasse und Befestigungsvorrichtung wird entsprechend größer, wodurch eine stärkere Schwingungsminderung erfolgt.

Bevorzugterweise sind die Piezoaktoren in der Nähe der Verbindungsstellen von Tilgermasse und Biegebalken sowie von Biegebalken und Befestigungsvorrichtung angeordnet. Dadurch werden die Biegekräfte, die durch die Piezoaktoren erzeugt werden, in der Nähe der festen Einspannungen auf den Biegebalken in dem Bereich übertragen, der bei einer Bewegung der Tilgermasse in Bezug zur Befestungsvorrichtung die größte Biegung aufweist. In der Nähe bedeutet in diesem Zusammenhang, daß die Piezoaktoren an der Stelle des Biegebalkens angeordnet werden, die sich direkt an die Verbindungsstelle anschließt. So wird eine möglichst große Übersetzung der Längenänderungen der Piezoaktoren erreicht.

Vorzugsweise weist der Biegebalken einen E-Modul im Bereich von 10.000 bis 50.000 Newton pro mm² auf. Durch einen derartig kleinen E-Modul läßt sich bereits mit geringen Stellkräften eine Biegung des Biegebalkens erreichen. Dabei kann der E-Modul auch im Bereich von 10.000 bis 20.000 Newton pro mm², insbesondere von 12.000 bis 15.000 Newton pro mm², liegen.

Vorzugsweise ist der Biegebalken aus glasfaserverstärktem Kunststoff gebildet. Bei glasfaserverstärktem Kunststoff läßt sich der E-Modul durch die Anordnung und Anzahl der Glasfasern gut einstellen. Dabei weist glasfaserverstärkter Kunststoff eine geringere Masse als beispielsweise Metall auf. Dadurch kann die Masse des aktiven Tilgers, die nicht zur Schwingungsminderung genutzt wird, reduziert werden. Das Gesamtgewicht des aktiven Tilgers wird so reduziert, was zu einer geringeren Belastung der Struktur führt, deren Schwingungen gemindert werden sollen.

Dabei ist besonders bevorzugt, daß die Glasfasern in Bezug zur Längenausdehnung des Biegebalkens unter einem Winkel von etwa 60° angeordnet sind. Damit wird ein niedriger E-Modul des Biegebalkens erreicht. Wird der Biegebalken als Mehrschichtverbund mit mehreren unidirektionalen Schichten aufgebaut, so weisen diese Schichten abwechselnde Faserrichtungen mit einem Winkel von z.B. ± 60° auf. Bei einem Faservolumenanteil von etwa 0,5 ist es somit möglich, einen gewünschten niedrigen E-Modul in Balkenlängsrichtung zu erreichen.

Vorzugsweise weist der aktive Tilger weitere Biegebalken auf, die jeweils einzeln mit der Tilgermasse und der Befestigungsvorrichtung verbunden sind, wobei alle Biegebalken bezüglich ihrer Längsausdehnung die gleiche oder jeweils um den gleichen Winkel versetze Orientierung aufweisen. Dadurch ist es möglich, eine größere Tilgermasse sicher mit der Befestigungsvorrichtung zu verbinden. Werden alle Biegebalken mit Piezoaktoren versehen, so können auch hohe Stellkräfte erzeugt werden. So ergibt sich ein aktiver Tilger, der trotz kompaktem Aufbau eine gute Schwingungsminderung ermöglicht.

Bevorzugterweise ist die Tilgermasse aus mehreren Elementen zusammengesetzt, wobei der Biegebalken zwischen benachbarten Elementen klemmend gehalten ist. Dadurch ergibt sich eine sichere Befestigung des Biegebalkens an bzw. in der Tilgermasse. Durch den scheibenförmigen Aufbau der Tilgermasse kann dabei auch die Masse an unterschiedliche Anforderungen angepaßt werden. Die Elemente können dabei z.B. scheibenförmig ausgebildet sein.

Vorzugsweise ist die Befestigungsvorrichtung aus mehreren Elementen zusammengesetzt, wobei der Biegebalken zwischen benachbarten Elementen klemmend gehalten ist. Der Biegebalken kann so sicher mit der Befestigungsvorrichtung verbunden werden. Dabei ergibt sich eine möglichst große Klemmfläche zwischen der Befestigungsvorrichtung und dem Biegebalken. Die Belastung des Biegebalkens wird so gering gehalten, was sich positiv auf die Lebensdauer auswirkt.

In einer bevorzugten Ausführungsform ist der Biegebalken an beiden Enden mit der Tilgermasse und mittig mit der Befestigungsvorrichtung verbunden. Dadurch kann jeder Biegebalken mit der doppelten Anzahl an Piezoaktoren versehen werden, wodurch die erzeugbaren Stellkräfte vergrößert werden.

Dabei ist besonders bevorzugt, daß die Tilgermasse becherförmig ist und die Befestigungsvorrichtung in den Hohlraum der becherförmigen Tilgermasse hineinragt. Damit wird der vorhandene Raum gut ausgenutzt. Gleichzeitig werden der Biegebalken und die Piezoaktoren durch die Tilgermasse abgedeckt und damit vor äußeren Einflüssen geschützt.

Vorzugsweise sind benachbarte Biegebalken bezüglich ihrer Längsausdehnung um 90° versetzt angeordnet. Der aktive Tilger wird dadurch in den von seiner bevorzugten Bewegungsrichtung abweichenden Richtungen sehr steif, wobei er mindestens zwei stapelförmig übereinander angeordnete Biegebalken aufweist. Der Einfluß äußerer Störgrößen wird dabei vermindert. Gleichzeitig muß um den Tilger herum nur ein geringer Sicherheitsabstand eingehalten werden. Der Tilger kann so auch verwendet werden, wenn nur ein geringer Bauraum zur Verfügung steht.

In einer weiteren bevorzugten Ausführungsform ist der Biegebalken an einem Ende mit der Tilgermasse und am anderen Ende mit der Befestigungsvorrichtung verbunden. Dadurch läßt sich ein aktiver Tilger mit besonders kompakten Abmessungen herstellen. Bei Verwendung von zwei Biegebalken können diese eine Parallelführung der Tilgermasse bewirken.

Vorzugsweise sind die Biegebalken stapelförmig übereinander angeordnet, wobei zwischen der Tilgermasse und der Befestigungsvorrichtung eine translatorische Bewegung erzeugbar ist. Durch den stapelförmigen Aufbau ergibt sich ein kompakter Aufbau, wobei viele Biegebalken übereinander angeordnet werden können, um so eine große Kraft zu erzeugen. Die Tilgermasse und die Befestigungsvorrichtung sind beispielsweise scheibenförmig ausgebildet, wobei die Biegebalken jeweils zwischen benachbarten Scheiben klemmend gehalten werden. Durch die im wesentlichen lineare Relativbewegung zwischen Tilgermasse und Befestigungsvorrichtung lassen sich translatorische Schwingungen vermindern.

Bevorzugterweise ist die Tilgermasse U-förmig, wobei sie an ihrer geschlossenen Seite mit dem Biegebalken verbunden ist und sich beide Längsseiten parallel zur Längsausdehnung des Biegebalkens erstrecken. Die Tilgermasse umgibt so quasi den Biegebalken an drei Seiten. Dadurch werden der Biegebalken und die Piezoaktoren vor äußeren Einflüssen geschützt.

In einer bevorzugten Ausführungsform sind die Biegebalken zwischen der Befestigungsvorrichtung und der Tilgermasse speichenförmig angeordnet, wobei zwischen Tilgermasse und Befestigungsvorrichtung eine rotatorische Bewegung erzeugbar ist. Dabei ist eine rotationssymmetrische Ausbildung von Befestigungsvorrichtung und Tilgermasse günstig, wobei die Befestigungsvorrichtung auf der Rotationsachse der Tilgermasse angeordnet ist und die Biegebalken die Befestigungsvorrichtung und die Tilgermasse radial verbinden. Dadurch erfolgt bei Ansteuerung der auf den Biegebalken angeordneten Piezoaktoren eine Drehbewegung der Tilgermasse um die Befestigungsvorrichtung. Durch die Relativbewegung lassen sich Torsionsschwingungen vermindern. Um die Biegebalken klemmend zu halten, können die Elemente der Befestigungsvorrichtung und der Tilgermasse beispielsweise als Zylinderstücke ausgebildet sein, die sich zusammengesetzt zu einem Zylinder ergänzen. Es ist auch denkbar, die Befestigungsvorrichtung hohl auszubilden und die Tilgermasse innerhalb der Befestigungsvorrichtung anzuordnen.

Vorzugsweise ist mindestens einer der Piezoaktoren als Sensor ausgebildet. Dabei wird der piezoelektrische Effekt ausgenutzt. Der Piezoaktor wird dabei nicht mit einer Spannung beaufschlagt, vielmehr wird an diesem eine Spannung abgegriffen, die durch eine Längenänderung des Piezoaktors hervorgerufen wird. Bei Bewegung der Tilgermasse in Bezug zur Befestigungsvorrichtung erfolgt eine Biegung des Biegebalkens und damit eine Längenänderung des daran befestigten Piezoaktors. Dadurch wird eine Ausgangsspannung erzeugt, die zur Biegung des Biegebalkens proportional ist. Durch die Ausbildung mindestens einer der Piezoaktoren als Sensor kann so auf einfache Weise eine Lageänderung der Tilgermasse in Bezug zur Befestigungsvorrichtung erfaßt werden.

Im folgenden wird die Erfindung anhand bevorzugter Ausführungsformen und der beiliegenden Zeichnungen näher beschrieben. Dabei sind gleiche Elemente mit gleichen Bezugszeichen versehen. Es zeigen:
- Fig. 1: eine schematische Darstellung zur Erläuterung des Wirkprinzips eines Piezoaktors mit Biegebalken,
- Fig. 2: eine Darstellung zur Erläuterung des Funktionsprinzips eines aktiven Tilgers in Ausgangsstellung,
- Fig. 3: die Darstellung nach Fig. 2 mit dem aktiven Tilger in ausgelenkter Stellung,
- Fig. 4: eine Schnittansicht eines aktiven Tilgers einer ersten Ausführungsform,
- Fig. 5: eine Explosionszeichnung des aktiven Tilgers nach Fig. 4,
- Fig. 6: eine Schnittansicht eines aktiven Tilgers einer weiteren Ausführungsform,
- Fig. 7: eine schematische Ansicht des aktiven Tilgers nach Fig. 6,
- Fig. 8: einen aktiven Tilger nach Fig. 6 in ausgelenkter Stellung,
- Fig. 9: eine schematische Darstellung eines aktiven Tilgers einer weiteren Ausführungsform und
- Fig. 10: eine schematische Darstellung des aktiven Tilgers nach Fig. 9 in ausgelenkter Stellung.

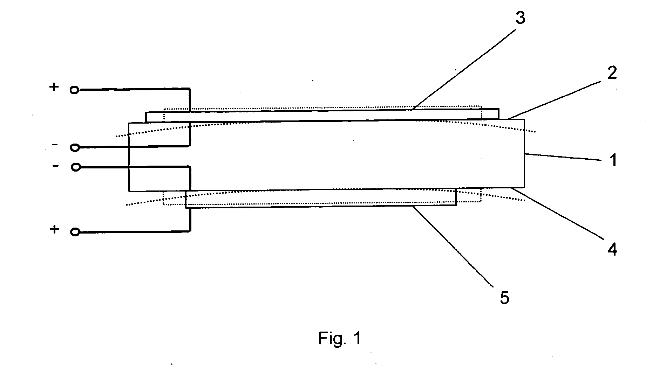

Fig. 1 zeigt einen Biegebalken 1, wobei auf dessen erster Seite 2 ein Piezoaktor 3 angeordnet ist, der plattenförmig ausgebildet ist. An der der Seite 2 gegenüberliegenden zweiten Seite 4 des Biegebalkens 1 ist ein weiterer Piezoaktor 5 angeordnet, der ebenfalls plattenförmig ausgebildet ist. Die Piezoaktoren 3, 5, die im folgenden auch kurz als "Aktoren" bezeichnet werden, sind mit elektrischen Anschlüssen versehen, an die eine Spannung angelegt werden kann. Durch eine gegenphasige Ansteuerung der Piezoaktoren 3, 5 erfolgt eine Ausdehnung des einen Aktors, während sich der andere Aktor zusammenzieht. In Fig. 1 ist dargestellt, daß sich der Aktor 3 ausdehnt, wobei der Aktor 5 sich verkürzt. Da die Aktoren 3, 5 fest mit dem Biegebalken 1 verbunden sind, erfolgt ein Verbiegen des Biegebalkens. Die Verschiebung der freien Enden des Biegebalkens 1 ist dabei proportional zur Änderung der Ausdehnung der Aktoren 3, 5.

Die Größe dieser Verschiebung und die Kraft, mit der das freie Balkenende verschoben wird, ist dabei vom E-Modul, dem Flächenträgheitsmoment, der Länge des Balkens abhängig. So ist ein möglichst geringer E-Modul bei großer Balkenlänge erwünscht. Prinzipiell läßt sich eine größere Kraft erzeugen, wenn die Höhe des Biegebalkens vergrößert wird. Damit ergibt sich ein größerer Abstand der Piezoelemente von der neutralen Faser des Balkens, was sich günstig auf den wirksamen Hebelarm an der Oberfläche des Biegebalkens bei Einleitung der Normalkräfte durch die Piezoaktoren auswirkt. Allerdings führt eine Vergrößerung der Höhe des Biegebalkens zu einer Vergrößerung des Flächenträgheitsmoments. Werden relativ hohe Kräfte bei geringer Verschiebung des Balkenendes gewünscht, kann eine größere Balkenhöhe vorteilhafter sein, als wenn eine größere Verschiebung des Balkenendes gewünscht ist.

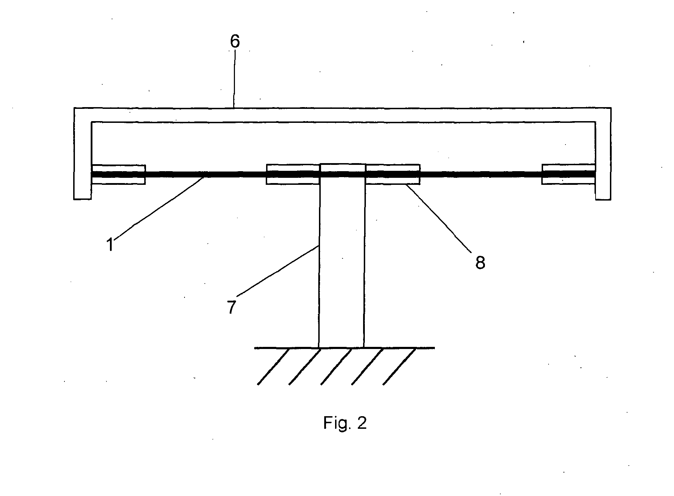

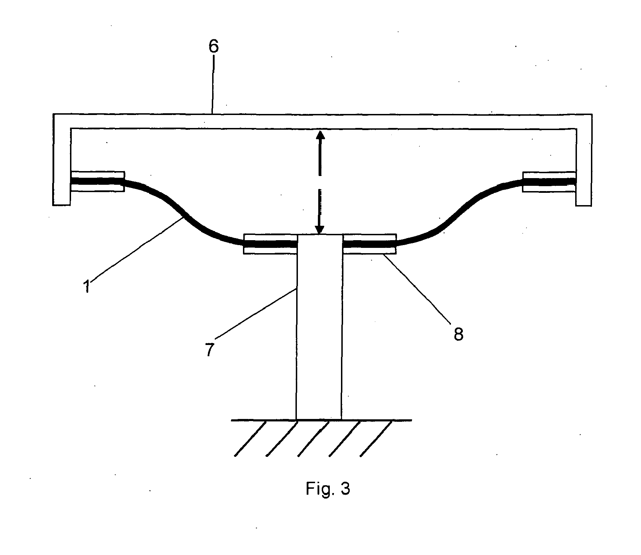

Das Funktionsprinzip eines aktiven Tilgers wird anhand von Fig. 2 erläutert. Dabei ist der Biegebalken 1 an beiden Enden mit einer Tilgermasse 6 verbunden. Mittig ist der Biegebalken 1 an einer Befestigungsvorrichtung 7 angeordnet, die mit der Struktur verbunden ist, deren Schwingungen gemindert werden sollen. An den Einspannstellen des Biegebalkens befinden sich Piezoaktoren 8, die, wie auch in Fig. 1 dargestellt, auf zwei gegenüberliegenden Seiten 2, 4 des Biegebalkens 1 angeordnet sind. Wird nun an die Piezoaktoren 8 eine Spannung angelegt, verschiebt sich die Tilgermasse 6 im wesentlichen linear in Bezug zur Befestigungsvorrichtung 7. Dies ist in Fig. 3 dargestellt.

Durch das Anlegen einer Spannung an die Piezoaktoren wird eine Biegung in den Biegebalken 1 induziert. Dadurch wird eine Kraft auf die Tilgermasse 6 ausgeübt, wobei eine entgegengesetzte Reaktionskraft über die Befestigungsvorrichtung 7 auf die Struktur übertragen wird, deren Schwingungen gemindert werden sollen. Diese Kraft bewirkt eine Schwingungsminderung. Sie ist im wesentlichen abhängig von der Tilgereigenfrequenz und der Tilgermasse, der Höhe der Biegebalken sowie von der Aktoranzahl und Aktorlänge.

Einen weiteren Einfluß auf die erreichbare Schwingungsminderung hat die Lage der Piezoaktoren 8. Es ist am günstigsten, die Piezoaktoren 8 möglichst nahe an den Verbindungsstellen des Biegebalkens 1 mit der Tilgermasse 6 und der Befestigungsvorrichtung 7 anzuordnen. Diese Stellen weisen zum einen die größte Biegung auf. Zum anderen ist der Abstand zwischen dem jeweiligen Piezoaktor 8 und dem entfernteren Ende des Biegebalkens 1 möglichst groß. Durch diesen Abstand wird das Übersetzungsverhältnis von Längenänderung des Piezoaktors 8 zur Verschiebung des Endes des Biegebalkens 1 bestimmt, wobei ein größerer Abstand eine größere Verschiebung bewirkt. In der Regel ist eine möglichst große Verschiebung des Balkenendes und damit eine große Relativbewegung zwischen Tilgermasse 6 und Befestigungsvorrichtung 7 erwünscht, da damit eine gute Schwingungsminderung bewirkt wird.

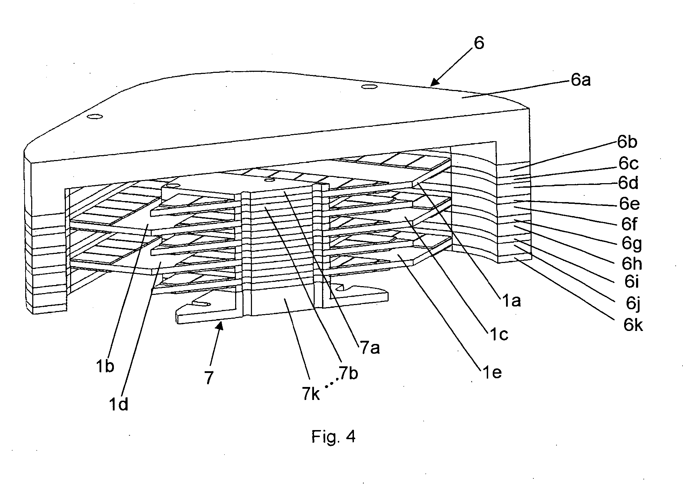

In Fig. 4 ist ein aktiver Tilger in Schnittansicht dargestellt. Dabei ist die Tilgermasse 6 becherförmig ausgebildet und aus einer Vielzahl von Scheiben 6a-6k aufgebaut. Die Befestigungsvorrichtung 7 ist innerhalb der Tilgermasse 6 angeordnet und ebenfalls durch eine Vielzahl von Scheiben 7a-7k aufgebaut. Die Anzahl der Scheiben 6a-6k und 7a-7k ist dabei von der Anzahl der verwendeten Biegebalken 1 abhängig und richtet sich so nach dem jeweiligen Einsatzzweck. Der aktive Tilger nach Fig. 4 weist fünf Biegebalken 1a-1e auf, wobei benachbarte Biegebalken 1a-1e bezüglich ihrer Längsausdehnung jeweils um 90° gedreht sind. Die Biegebalken 1a-1e sind jeweils zwischen zwei Scheiben 6a-6k der Tilgermasse 6 und zwei Scheiben 7a-7k der Befestigungsvorrichtung 7 eingespannt. Dadurch ergibt sich eine sichere Befestigung der Biegebalken 1 an der Tilgermasse 6 und der Befestigungsvorrichtung 7. Direkt neben den Verbindungsstellen sind an der Oberseite und an der Unterseite der Biegebalken 1a-1e die Piezoaktoren 8 angeordnet. Die Biegebalken 1a-1e und die Befestigungsvorrichtung 7 sind innerhalb der becherförmigen Tilgermasse 6 angeordnet, so daß die Tilgermasse 6 die Biegebalken 1 und die Befestigungsvorrichtung 7 vor äußeren Einflüssen schützt. Bei Ansteuerung der Piezoaktoren 8 führt die Tilgermasse 6 in Bezug zur Befestigungsvorrichtung 7 eine translatorische Bewegung aus. Im Normalfall werden alle Piezoaktoren 8 dazu verwendet, eine Biegung in die Biegebalken 1 zu induzieren. Denkbar ist aber auch, mindestens einen der Piezoaktoren 8 als Sensor zu verwenden, der eine Ausgangsspannung erzeugt, die proportional zur Lageänderung der Tilgermasse ist. Dadurch kann beispielsweise die korrekte Funktion der übrigen Piezoaktoren 8 überwacht werden.

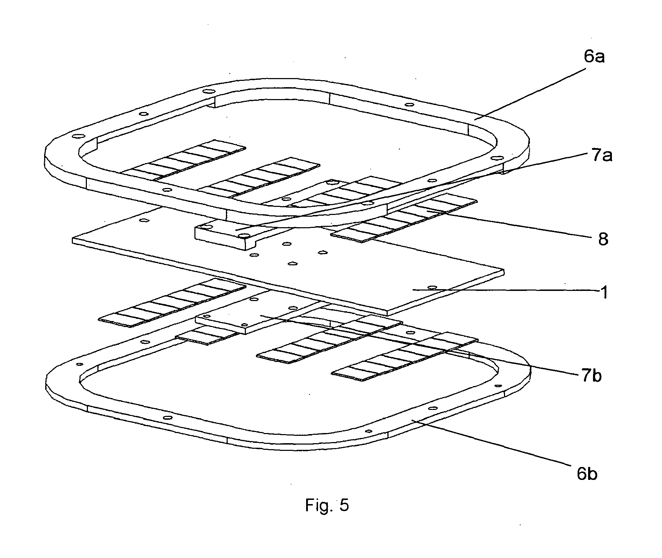

In Fig. 5 sind einige Elemente des in Fig. 4 dargestellten aktiven Tilgers vereinzelnt dargestellt. Dabei ist gut zu erkennen, wie der Biegebalken 1 zwischen den Scheiben 6a und 6b der Tilgermasse 6 und den Scheiben 7a und 7b der Befestigungsvorrichtung 7 eingespannt wird. Im Bereich der Einspannstellen sind an der Oberseite des Biegebalkens und an der Unterseite des Biegebalkens Piezoaktoren 8 angeordnet. Diese sind dabei plattenartig ausgebildet. Die Scheibe 6a der Tilgermasse 6 und die Scheibe 7a der Befestigungsvorrichtung 7 weisen dabei Ausnehmungen auf, in denen die Biegebalken 1 gehalten werden und deren Tiefe der Höhe der Biegebalken entspricht.

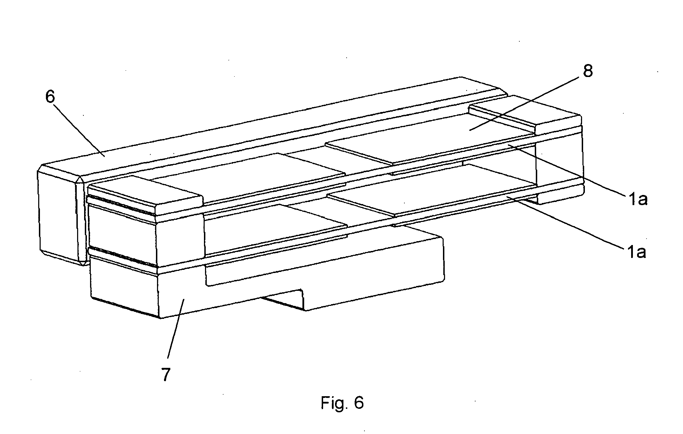

Fig. 6 zeigt eine weitere Ausführungsform des aktiven Tilgers in einer Schnittansicht. Dabei weist der aktive Tilger zwei Biegebalken 1a und 1b auf. Diese sind an einem Ende mit der Befestigungsvorrichtung 7 verbunden und mit dem entgegengesetzten Ende mit der Tilgermasse 6. Dabei sind die Tilgermasse 6 und die Befestigungsvorrichtung 7 wieder scheibenförmig ausgebildet, so daß die Biegebalken zwischen einzelnen Scheiben der Tilgermasse 6 und der Befestigungsvorrichtung 7 eingespannt werden. Direkt neben den Einspannstellen sind an der Oberseite und der Unterseite der Biegebalken 1 Piezoaktoren 8 angeordnet.

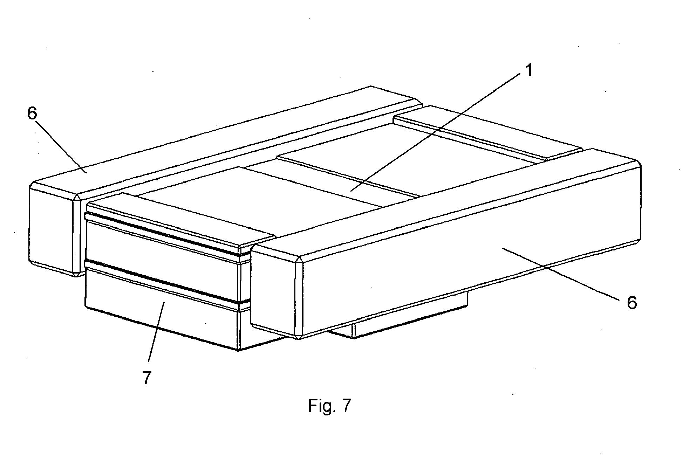

Fig. 7 zeigt eine perspektivische Ansicht des aktiven Tilgers nach Fig. 6. Die Tilgermasse 6 ist dabei U-förmig ausgebildet, so daß sie die Biegebalken 1 umgibt.

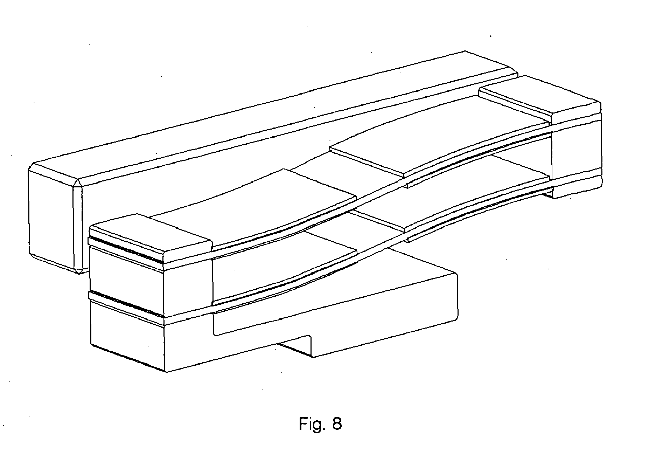

Wird nun eine Spannung an die Piezoaktoren 8 angelegt, wird in die Biegebalken 1 eine Spannung induziert. Dies ist in Fig. 8 dargestellt. Die Biegebalken 1 wirken dabei wie eine Parallelfederanordnung. Es folgt also eine parallele Verschiebung der Tilgermasse 6. Eine derartige Anordnung kann besonders bei beengten Platzverhältnissen günstig sein. Durch die Bewegung der Tilgermasse 6 wird eine Kraft erzeugt, die über die Befestigungsvorrichtung 7 auf das Bauteil übertragen wird, dessen Schwingung gemindert werden soll. Durch eine periodische Ansteuerung der Piezoaktoren 8 wird so eine periodische Kraft erzeugt, deren Frequenz auf die Schwingungsfrequenz des Bauteils abgestimmt ist. Dadurch erfolgt eine Schwingungsminderung. Die Stellsignale für die Piezoaktoren 8 werden von einer Steuereinrichtung generiert, die mit Hilfe von Sensoren die Schwingungen des Bauteils erfaßt.

Derartige Sensoren können an der Struktur angeordnet sein, deren Schwingung vermindert werden soll. Denkbar ist auch eine Anordnung der Sensoren an der Befestigungsvorrichtung 7 und/oder an der Tilgermasse 6 des aktiven Tilgers. Als Sensoren werden häufig Beschleunigungssensoren verwendet. Denkbar ist aber auch, die Lage der Tilgermasse 6 in Bezug zur Befestigungsvorrichtung 7 zu erfassen und aufgrund der Lageänderung ein Signal zu erzeugen, das zu den Schwingungen der zu dämpfenden Struktur proportional ist. Dafür kann beispielsweise einer der Piezoaktoren 8 als Sensor verwendet werden. Auch andere Ausführungen sind denkbar.

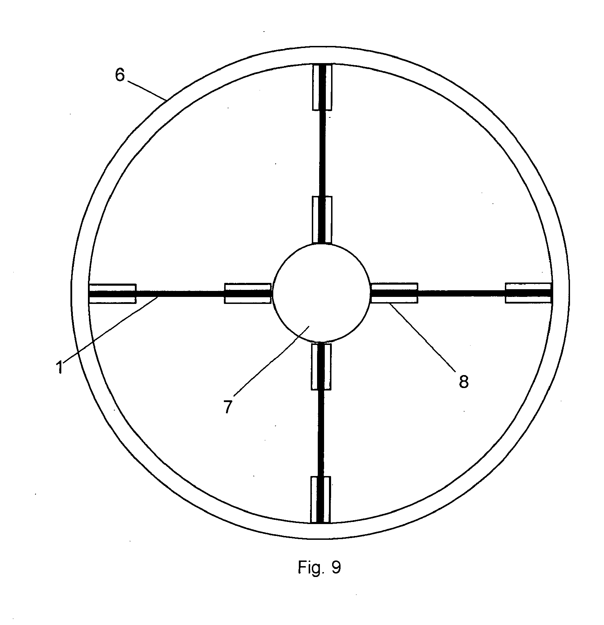

In Fig. 9 ist ein aktiver Tilger zur Minderung von Torsionsschwingungen schematisch dargestellt. Die Tilgermasse 6 ist dabei als Hohlzylinder ausgebildet, wobei die ebenfalls zylinderförmige Befestigungsvorrichtung 7 innerhalb der Tilgermasse 6 auf deren Rotationsachse angeordnet ist. Über vier Biegebalken 1, die bezüglich ihrer Längsausdehnung jeweils um 90° versetzt angeordnet sind, ist die Tilgermasse 6 mit der Befestigungsvorrichtung 7 verbunden. Bei einer höheren Anzahl an Biegebalken 1, um beispielsweise die erzeugbare Kraft zu erhöhen, werden die Biegebalken 1 natürlich in einem anderen Winkel zueinander angeordnet sein. Dabei kann einer der Biegebalken 1 so ausgebildet sein, daß er durch die Befestigungsvorrichtung 7 hindurchgeht und dort in seiner Mitte gehalten wird. In der Regel werden aber alle Biegebalken 1 gleich ausgebildet werden und mit ihrem einen Ende an der Befestigungsvorrichtung 7 und mit ihrem anderen Ende an der Tilgermasse 6 befestigt sein. Dabei können die Tilgermasse 6 und die Befestigungsvorrichtung 7 aus einzelnen Elementen zusammengesetzt sein, die Teilstücke eines Zylinders darstellen und zusammengesetzt die gewünschte Zylinderform ergeben, wobei sie die Biegebalken 1 klemmend aufnehmen. Die Biegebalken 1 sind im Bereich der Einspannstellen mit Piezoaktoren 8 versehen. Dabei kann einer der Piezoaktoren 8 als Sensor verwendet werden.

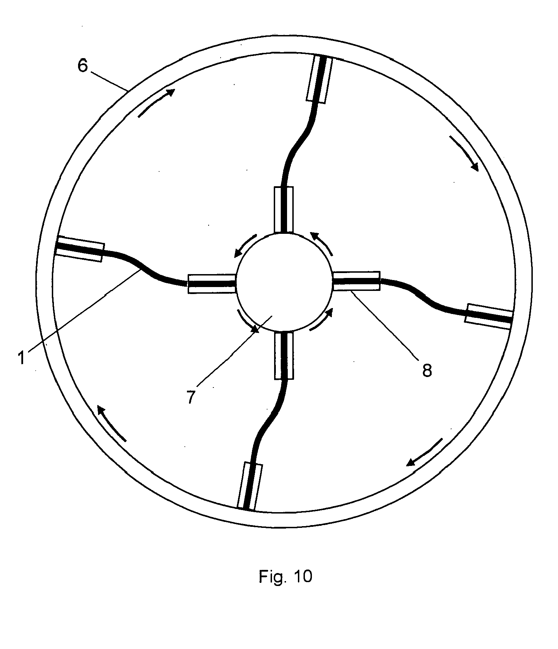

Bei Ansteuerung der Piezoaktoren 8 erfolgt eine Drehbewegung der Tilgermasse 6. Dies ist in Fig. 10 dargestellt. Durch eine gezielte Ansteuerung der Piezoaktoren 8 führt die Tilgermasse also eine Rotationsbewegung in Bezug zur Befestigungsvorrichtung 7 aus, die zur Minderung von Torsionsschwingungen einer zu dämpfenden Struktur dient. Die Position von Tilgermasse und Befestigungsvorrichtung ist dabei je nach Verwendungszweck austauschbar. Die Tilgermasse 6 würde dann als Befestigungsvorrichtung und die Befestigungsvorrichtung 7 als Tilgermasse dienen.

## Patentansprüche

1. Aktiver Tilger, der eine Tilgermasse und eine Befestigungsvorrichtung aufweist, **dadurch gekennzeichnet, daß** er mindestens einen Biegebalken (1) aufweist, der die Tilgermasse (6) mit der Befestigungsvorrichtung (7) verbindet, wobei auf einer ersten Seite (2) des Biegebalkens (1) mindestens ein Piezoaktor (8) angeordnet ist.

2. Aktiver Tilger nach Anspruch 1, **dadurch gekennzeichnet, daß** auf einer zweiten Seite (4) des Biegebalkens (1), die der ersten Seite gegenüberliegt, mindestens ein weiterer Piezoaktor (8) angeordnet ist.

3. Aktiver Tilger nach Anspruch 1 oder 2, **dadurch gekennzeichnet, daß** die Piezoaktoren 8 in der Nähe der Verbindungsstellen von Tilgermasse (6) und Biegebalken (1) sowie von Biegebalken (1) und Befestigungsvorrichtung (7) angeordnet sind.

4. Aktiver Tilver nach einem der Ansprüche 1 bis 3, **dadurch gekennzeichnet, daß** der Biegebalken (1) einen E-Modul im Bereich von 10.000 bis 50.000 Newton pro mm² aufweist.

5. Aktiver Tilger nach einem der Ansprüche 1 bis 4, **dadurch gekennzeichnet, daß** der Biegebalken (1) aus glasfaserverstärktem Kunststoff gebildet ist.

6. Aktiver Tilger nach Anspruch 5, **dadurch gekennzeichnet, daß** die Glasfasern in Bezug zur Längenausdehnung des Biegebalkens (1) unter einem Winkel von 60°angeordnet sind.

7. Aktiver Tilger nach einem der Ansprüche 1 bis 6, **dadurch gekennzeichnet, daß** er weitere Biegebalken (1) aufweist, die jeweils einzeln mit der Tilgermasse (6) und der Befestigungsvorrichtung (7) verbunden sind, wobei alle Biegebalken (1) bezüglich ihrer Längsausdehnung die gleiche oder jeweils um den gleichen Winkel versetze Orientierung aufweisen.

8. Aktiver Tilger nach einem der Ansprüche 1 bis 7, **dadurch gekennzeichnet, daß** die Tilgermasse (6) scheibenförmig aufgebaut ist und der Biegebalken (1) zwischen zwei Scheiben (6a-6f) klemmend gehalten ist.

9. Aktiver Tilger nach einem der Ansprüche 1 bis 8, **dadurch gekennzeichnet, daß** die Befestigungsvorrichtung (7) aus Scheiben zusammengesetzt ist, wobei der Biegebalken (1) zwischen zwei Elementen (7a-7k) klemmend gehalten ist.

10. Aktiver Tilger nach einem der Ansprüche 1 bis 9, **dadurch gekennzeichnet, daß** der Biegebalken (1) an beiden Enden mit der Tilgermasse (6) und mittig mit der Befestigungsvorrichtung (7) verbunden ist.

11. Aktiver Tilger nach Anspruch 10, **dadurch gekennzeichnet, daß** die Tilgermasse (6) becherförmig ist und die Befestigungsvorrichtung (7) in den Hohlraum der becherförmigen Tilgermasse (6) hineinragt.

12. Aktiver Tilger nach Anspruch 10 oder 11, **dadurch gekennzeichnet, daß** benachbarte Biegebalken (1) bezüglich ihrer Länge um 90° versetzt angeordnet sind.

13. Aktiver Tilger nach einem der Ansprüche 1 bis 9, **dadurch gekennzeichnet, daß** der Biegebalken (1) an einem Ende mit der Tilgermasse (6) und am anderen Ende mit der Befestigungsvorrichtung (7) verbunden ist.

14. Aktiver Tilger nach einem der Ansprüche 1 bis 13, **dadurch gekennzeichnet, daß** die Biegebalken (1) stapelförmig übereinander angeordnet sind, wobei zwischen der Tilgermasse (6) und der Befestigungsvorrichtung (7) eine translatorische Bewegung erzeugbar ist.

15. Aktiver Tilger nach Anspruch 13 oder 14, **dadurch gekennzeichnet, daß** die Tilgermasse (6) U-förmig ist, wobei sie an ihrer geschlossenen Seite mit dem Biegebalken (1) verbunden ist und sich beide Längsseiten parallel zur Längsausdehnung des Biegebalkens (1) erstrecken.

16. Aktiver Tilger nach einem der Ansprüche 1 bis 13, **dadurch gekennzeichnet, daß** die Biegebalken (1) zwischen der Befestigungsvorrichtung (7) und der Tilgermasse (6) speichenförmig angeordnet sind, wobei zwischen Tilgermasse (6) und Befestigungsvorrichtung (7) eine rotatorische Bewegung erzeugbar ist.

17. Aktiver Tilger nach einem der Ansprüche 1 bis 16, **dadurch gekennzeichnet, daß** mindestens einer der Piezoaktoren (8) als Sensor ausgebildet ist.
